Europäisches Patentamt

European Patent Office

Office européen des brevets

(19)

(11) Veröffentlichungsnummer : **0 304 442 B1**

## (12) EUROPÄISCHE PATENTSCHRIFT

(45) Veröffentlichungstag der Patentschrift :
**27.11.91 Patentblatt 91/48**

(51) Int. Cl.$^5$ : **F16C 29/06**

(21) Anmeldenummer : **88901535.0**

(22) Anmeldetag : **25.02.88**

(86) Internationale Anmeldenummer :
**PCT/CH88/00044**

(87) Internationale Veröffentlichungsnummer :
**WO 88/06686 07.09.88 Gazette 88/20**

(54) **WÄLZKÖRPER-LÄNGSLAGER AN RELATIV ZUEINANDER LÄNGSVERSCHIEBBAREN TRÄGERN.**

(30) Priorität : **26.02.87 CH 729/87**

(43) Veröffentlichungstag der Anmeldung :
**01.03.89 Patentblatt 89/09**

(45) Bekanntmachung des Hinweises auf die
Patenterteilung :
**27.11.91 Patentblatt 91/48**

(84) Benannte Vertragsstaaten :
**DE FR GB IT NL SE**

(56) Entgegenhaltungen :
**EP-A- 0 128 871**
**DE-A- 2 121 848**
**DE-A- 2 838 777**
**DE-B- 1 228 110**

(56) Entgegenhaltungen :
**FR-A- 1 563 131**
**FR-A- 2 527 281**
**US-A- 3 035 873**
**US-A- 3 194 612**
**US-A- 3 398 999**
**US-A- 3 964 802**

(73) Patentinhaber : **ROTTERMANN AG**
**Seestrasse 151**
**CH-8820 Wadenswil (CH)**

(72) Erfinder : **ROTTERMANN, Robert**
**Seestrasse 151**
**CH-8820 Wädenswil (CH)**

(74) Vertreter : **Rottmann, Maximilian R.**
**c/o Rottmann, Quehl & Zimmermann AG**
**Glattalstrasse 37**
**CH-8052 Zürich (CH)**

## Beschreibung

Die Erfindung betrifft ein Wälzkörper-Längslager an relativ zueinander längsverschiebbaren Trägern. Einer der Träger kann Teil eines ortsfesten Tragkörpers sein, an dem ein beweglicher Träger oder mehrere, teleskopartig ausziehbare Träger längsverschiebbar gelagert sind. Die gegenseitig verschiebbaren Träger können beispielsweise die Tragkonstruktion eines Röntgentisches bilden, bei dem in der Regel mehrere Tischteile durch den Tragkörper durchlaufen, also nach beiden Seiten ausfahrbar sind.

Diese und ähnliche Anwendungen verlangen von den Wälzkörper-Längslagern einerseits eine geringe Bauhöhe und andererseits einen präzisen Lauf in jeder Verschiebestellung und in jedem Belastungsfall, so dass die Starrheit der genannten Tragkonstruktion durch die bewegliche Lagerung ihrer Teile praktisch nicht beeinträchtigt wird.

Es sind Wälzkörper-Längslager bekannt, bei denen die Wälzkörper in stabförmigen Halterungen geführt sind (CH-PS 568 502), welche in bestimmten Längen angeboten und zwischen den Laufbahnen frei beweglich angeordnet werden. Solche Wälzkörperstäbe Waben den Nachteil, dass sie die gegeneinander längsverschiebbaren Träger in jeder Verschiebungslage nur auf einem Teil ihrer Länge gegenseitig abstützen können und dass sie im Betrieb allmählich abwandern und dadurch den theoretisch verfügbaren Verschiebungsweg zunehmend einschränken.

Ferner sind Wälzkörper-Umlauflager für Längsführungen bekannt (CH-PS 505 311), die als fertige Montage-Einheit, ähnlich den Wälzlagern für Drehbewegungen, im Handel erhältlich sind. Bedingt durch ihre Handelsform, beanspruchen solche Umlauflager verhältnismässig viel Bauhöhe. Für die Längslagerung langgestreckter Träger würde man überdies mehrere Umlauflager dieser Art, verteilt auf die Trägerlänge, benötigen. Eine Konstruktion mit mehreren Lagerstellen hat aber den Nachteil, dass die Enden eines durchlaufenden Trägers an bestimmten Lagerstellen das Umlauflager verlassen und dann wieder in dasselbe eingefahren werden müssen. Dieses Einfahren bietet wegen der Durchbiegung des Trägers Schwierigkeiten, die sich auch mit zusätzlichen Führungselementen nur schwer beheben lassen, da das Ausrichten des Trägers unter Last kaum möglich ist. Jedenfalls ist auf diese Weise eine präzise Lagerung und stossfreie Bewegung des Trägers praktisch unmöglich.

Die Erfindung bezweckt die Schaffung eines Wälzkörper-Längslagers, das unter Vermeidung der erwähnten Nachteile eine präzise Längsführung langgestreckter Träger ermöglicht, wenig Bauhöhe beansprucht, in der Herstellung einfach und billig ist und auf jede Trägerlänge angepasst werden kann.

Ein Wälzkörper-Längslager gemäß Oberbegriff des Anspruchs 1 ist aus der EP-A- 128 871 bekannt.

Das erfindungsgemäße Wälzkörper-Längslages enthält die im Anspruch 1 aufgeführten Merkmale.

Durch das erfindungsgemässe Wälzkörper-Längslager sind die relativ zueinander längsverschiebbaren Träger auf der ganzen jeweiligen Überlappungslänge mit Wälzkörpern gegenseitig abgestützt. Dies ergibt eine bessere Lastverteilung als mit auf bestimmte Längsbereiche begrenzten Lagerstellen. Infolgedessen können kleinere Wälzkörper verwendet und damit die Lagerdimensionen verringert werden.

Für die gegenseitige Längslagerung zweier Träger sind normalerweise zwei Längslager vorgesehen, die parallel nebeneinander verlaufen. Dabei haben die beiden Längslager und die einzelnen Lagerabschnitte derselben unterschiedliche Funktionen. Die Wälzkörper übernehmen in dem Lagerabschnitt, in dem sie auf der Gegenlaufbahn der Laufschiene abrollen, die Längsführung, während sie in dem den Wälzkörper-Rücklauf bildenden Lagerabschnitt keine Führungsfunktion haben. Im einen Längslager kann ausserdem neben der Längsführung eine seitliche Führung der tragenden Wälzkörper zur Aufnahme von Querkräften vorgesehen sein, wogegen bei dem anderen Längslager eine Seitenführung der Wälzkörper entfällt. Die einzelnen Lagerabschnitte lassen sich nun in einfacher Weise für die verschiedenen Funktionen einrichten, indem die betreffenden Laufbahnen für die Wälzkörper an den Lagerschienen und an der Laufschiene in verschiedenen Höhen angeordnet werden. Die nur längsführenden Wälzkörper sind im tragenden Lagerabschnitt soweit in den Längsnuten der Lagerschiene versenkt, dass sie in Verbindung mit der als Gegenlaufbahn dienenden Längsseite der Laufschiene gerade nur diese Funktion ausüben können. Falls diese Wälzkörper, z.B. aus später genannten Gründen, auf einer noch tiefer in der Längsnut liegenden Laufbahn geführt sind, kann die diesem Lagerabschnitt zugeordnete Gegenlaufbahn durch eine an der Laufschiene freigesetzte Fläche gebildet sein. Die Lösung für einen Lagerabschnitt mit zusätzlicher Seitenführung der Wälzkörper besteht darin, dass die betreffende Lagerschiene und die Laufschiene an den einander zugewandten Längsseiten Längsnuten aufweisen, in denen die Wälzkörper seitlich geführt sind, Dabei greifen die Wälzkörper vorzugsweise gleich tief in die beiden Längsnuten ein. Im Gegensatz dazu können die rücklaufenden Wälzkörper im betreffenden Lagerabschnitt in einer Längsnut mit tiefer gelegener Laufbahn vollständig verschwinden.

Die Wälzkörper-Führung besteht aus einer endlosen Reihe von bandförmig zusammenhängenden Wälzkörper-Halterungen. Jede Wälzkörper-Halterung weist beidseitig Stege auf, die sich parallel zur Laufbahn erstrecken und vorzugsweise in der Höhe symmetrisch zur Wälzkörperachse angeordnet sind. Diese Stege dienen einerseits zur seitlichen Führung der Wälzkörper-Halterungen innerhalb der Längsnuten der Lagerschienen. Andererseits können sie in gewissen Lagerabschnitten eine Tragfunktion haben. So ist es beispielsweise von Vorteil, wenn die Längsnut an der unteren Längsseite der Lagerschienen an ihren Oeffnungsrändern gegeneinander gerichtete, die Stege der Wälzkörper-Halterungen untergreifende Längsrippen aufweist, welche das Abheben unbelasteter Wälzkörper von der Laufbahn wegmässig begrenzen. Damit wird der sonst unvermeidliche Durchhang der bei verschobenen Trägern unter Umständen langen Reihe unbelasteter Wälzkörper vermieden. Dies betrifft an sich auch die Lagerabschnitte für den Wälzkörper-Rücklauf; hingegen können die Längsnuten dieser Lagerabschnitte auch durch Konstruktionsteile des betreffenden Trägers abgedeckt sein, so dass in diesem Fall auf die genannten Längsrippen verzichtet werden kann.

Beim Vorhandensein der Längsrippen muss die Laufbahn für die Wälzkörper in den Längsnuten an der unteren Längsseite der oberen Lagerschienen unter Umständen so tief angelegt werden, dass die Wälzkörper nicht oder nur ungenügend aus der Längsnut herausragen,um auf einer ebenen Längsseite der Laufschiene abrollen zu können. In diesem Fall ist es, wie bereits erwähnt, nötig, die Gegenlaufbahn durch eine an der Laufschiene freigesetzte Fläche zu bilden.

Die Abstützung der Wälzkörper-Halterungen durch die auf den Längsrippen aufliegenden Stege derselben erleichtert auch die Montage der Wälzkörper-Führungsbänder. Eine symmetrische Anordnung der Stege hat ausserdem den Vorteil, dass man bei der Montage der Wälzkörper-Führung nicht auf die Seitenlage zu achten braucht und dass in Lagerabschnitten mit Seitenführung der Wälzkörper die Stege zugleich in beiden einander zugeordneten Längsnuten seitlich geführt werden können.

Die Wälzkörper-Halterungen einer Wälzkörper-Führung sind untereinander verbunden, so dass die Wälzkörper-Führung als Ganzes in ihrer Länge gespannt werden kann. Die Verbindung ist dabei beweglich gestaltet, damit die Umlenkung der Wälzkörper-Führung auf engstem Raum stattfinden kann.

Beispielsweise können die Wälzkörper-Halterungen je durch ein Gelenk miteinander verbunden sein, so dass die Wälzkörper-Führung wie eine Kette verlängert oder verkürzt werden kann. Als Verbindung kann aber auch ein biegsames Bandstück dienen. Vorzugsweise bestehen die Wälzkörper-Halterungen aus einem elastischen Material, z.B. aus thermoplastischem Kunststoff, wobei die Verbindungsteile an den Halterungen angeformt sind.

In der Zeichnung sind Ausführungsbeispiele der Erfindung dargestellt, und zwar zeigen:

Fig. 1 einen Querschnitt durch eine Tragkonstruktion mit drei auf Wälzkörper-Längslagern nach der Erfindung relativ zueinander längsverschiebbaren Trägern;

Fig. 2 Längsschnitt durch eine Endpartie einer Lagerschiene in grösserem Massstab;

Fig. 3 und 4 Seitenansicht und Draufsicht eines Teils der Wälzkörper-Führung für zylindrische Wälzkörper, gemäss einer ersten Ausführungsform;

Fig. 5 und 6 Seitenansicht und Draufsicht eines Teils der Wälzkörper-Führung für zylindrische Wälzkörper, gemäss einer zweiten Ausführungsform;

Fig. 7 und 8 Seitenansicht und Draufsicht eines Teils der Wälzkörper-Führung für zylindrische Wälzkörper, gemäss einer dritten Ausführungsform;

Fig. 9 und 10 Seitenansicht und Draufsicht einer Halterung für kugelförmige Wälzkörper;

Fig. 11 Querschnitt durch eine Laufschiene und eine Lagerschiene mit kugelförmigen Wälzkörpern und Wälzkörper-Halterungen nach den Fig. 9 und 10; und

Fig. 12 Querschnitt durch eine Laufschiene und eine Lagerschiene mit zylindrischen Wälzkörpern, deren Achsen um 45° zur Laufbahn geneigt sind und sich kreuzen.

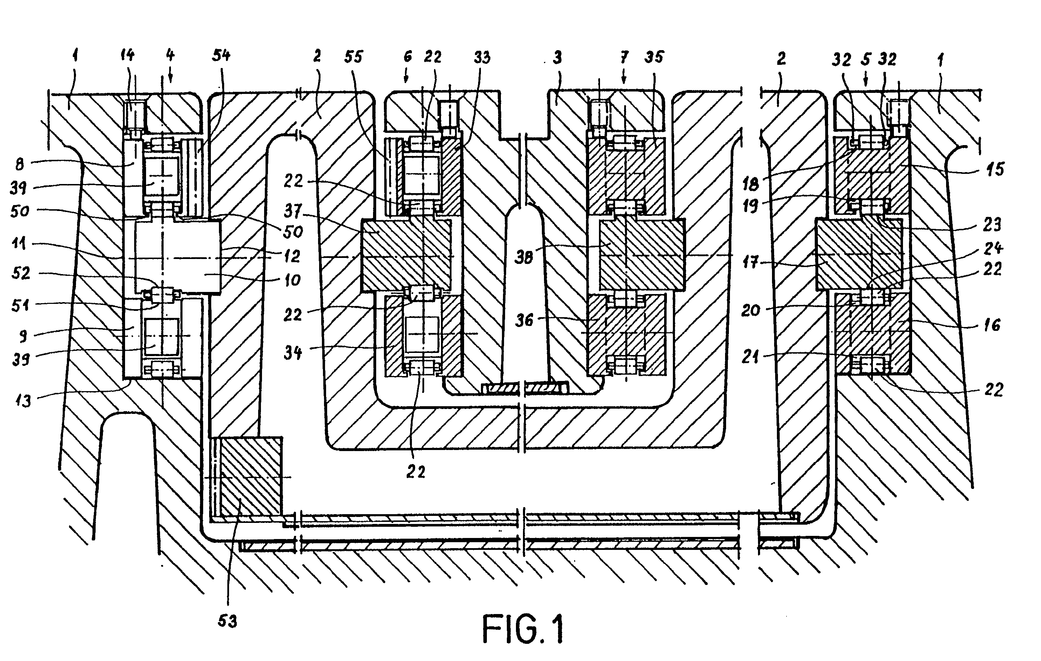

Die Fig. 1 zeigt im Querschnitt eine Tragkonstruktion mit drei relativ zueinander teleskopartig längsverschiebbaren Trägern 1, 2 und 3, von denen der äussere Träger 1 Teil eines ortsfesten Tragkörpers sein kann. Zur gegenseitigen Lagerung der Träger 1, 2 und 3 sind Wälzkörper-Längslager vorgesehen, die sich über die ganze Länge der Träger erstrecken, und zwar sind je zwei Längslager 4 und 5 zwischen den Trägern 1 und 2 und zwei Längslager 6 und 7 zwischen den Trägern 2 und 3 angeordnet. Das Längslager 4 umfasst zwei parallele Lagerschienen 8 und 9, die am äusseren Träger 1 übereinander angebracht sind, und eine Laufschiene 10, die zwischen den beiden Lagerschienen 8 und 9 und parallel zu diesen verläuft und am mittleren Träger 2 angebracht ist. Die Lagerschienen und die Laufschiene sind z.B. mit nicht dargestellten Schrauben am betreffenden Träger befestigt. Dazu ist am Träger 1 eine Aufspannfläche 11 und am Träger 2 eine Aufspannfläche 12 vorgesehen. Die Laufschiene 10 kann auch ein Konstruktionsteil des Trägers 2 sein. Die untere Lagerschiene 9 ruht auf einem Absatz 13 des Trägers 1. Mittels der Stellschraube 14 ist eine Querverspannung des Längslagers 4 möglich. Das entsprechende Längslager 5 weist in gleicher Weise zwei Lagerschienen 15, 16 und eine Laufschiene 17 auf, die mit entsprechenden Mitteln an den Trägern 1 und 2 angebracht sind.

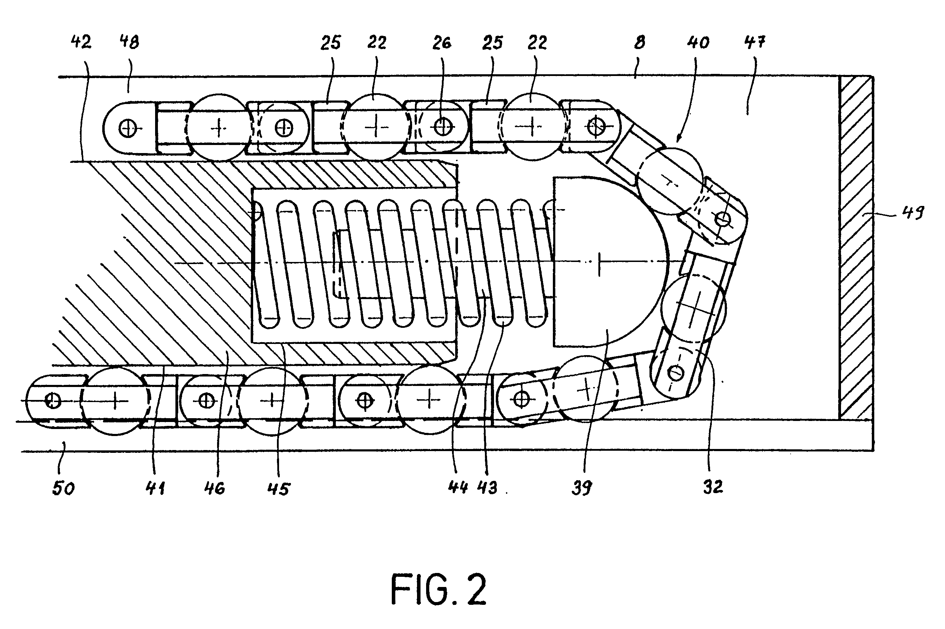

Jede der Lagerschienen (15 und 16 beim Längslager 5) weist an ihrer oberen und an ihrer unteren Längsseite je eine Längsnut 18, 19 bzw. 20, 21 auf, die je zusammen eine Umlaufbahn für eine endlose Reihe von zylindrischen Wälzkörpern 22 bilden, wobei der Nutengrund als Laufbahn für die Wälzkörper ausgebildet ist. Die dazwischen liegende Laufschiene 17 ist an ihrer oberen und unteren Längsseite je mit einer Gegenlaufbahn 23 bzw. 24 versehen. Die Wälzkörper 22 sind in bandförmig zusammenhängenden Halterungen geführt, was anhand der Fig. 2 bis 4 näher erläutert wird.

Die Längslager 6 und 7 mit ihren Lagerschienen 33, 34 bzw. 35, 36 und ihrer Laufschiene 37 bzw. 38 sind im Prinzip gleich aufgebaut und an den betreffenden Trägern 2 und 3 angeordnet wie die Längslager 4 und 5.

Die Wälzkörper 22 sind gemäss den Fig. 2, 3 und 4 in bandförmig zusammenhängenden Halterungen 25 aus Kunststoff geführt, welche je um eine Achse 26 gelenkig miteinander verbunden sind. Jede Halterung 25 besteht aus zwei Haltekörpern 27 und 28, die mit elastischen Führungslippen 29 ausgerüstet sind und an denen die Gelenkteile 30 und 31 angeformt sind. Die Haltekörper 27 und 28 sind beidseitig durch Stege 32 miteinander verbunden, die sich parallel zur Laufbahn der Wälzkörper 22 erstrecken und in der Höhe symmetrisch zur Wälzkörperachse angeordnet sind. Diese Stege 32, deren Dicke geringer ist als die der Haltekörper 27 und 28, führen die Wälzkörper 22 seitlich.

Eine weitere Funktion dieser Stege 32 ist die seitliche Führung der Wälzkörper-Halterungen 25 an den Flanken der Längsnuten 18, 19 bzw. 20, 21 in den Lagerschienen (Fig. 1, Längslager 5).

Die Fig. 2 zeigt die Umlenkung der Wälzkörper-Führung am einen Ende der Lagerschiene 8, als Beispiel für die Umlenkung an beiden Enden jeder Lagerschiene aller Längslager.

Als Umlenkorgan dient ein halbkreiszylindrischer Pilz 39, über den die Wälzkörper-Führung 40 von der Laufbahn 41 in die Rücklaufbahn 42 überführt wird. Der Pilz 39 ist durch eine Feder 43 vorgespannt, welche den Pilzschaft 44 aufnimmt und sich am Grund einer Längsbohrung 45 im Kern 46 der Lagerschiene 8 abstützt. Durch die Feder 43 wird die bandförmige Wälzkörper-Führung 40 straff gehalten. Der Pilz 39 kann auch so ausgebildet sein, dass nicht, wie in Fig. 2 gezeigt, die Wälzkörper 22 auf der Pilzoberfläche abrollen, sondern die Stege 32 der Pilzoberfläche entlang gleiten. Der Umlenkungsraum ist seitlich je durch eine Längswand 47 begrenzt, welche in der gleichen Ebene liegt wie die Seitenflanke 48 der die Wälzkörper-Umlaufbahn bildenden Längsnut (18 bis 21 in Fig. 1), so dass die Seitenführung der Wälzkörper-Halterungen 25 auch im Umlenkbereich gewährleistet ist. Am Schienenende ist der Umlenkraum durch eine Wand 49 abgeschlossen. Die an der Umlenkung der Wälzkörper-Führung beteiligten Elemente können auch eine separate Baueinheit bilden, welche an die Lagerschiene angesetzt wird.

An der Unterseite der Lagerschiene 8 ist an den Öffnungsrändern der Längsnut je eine einwärts gerichtete Längsrippe 50 vorgesehen. Auf diesen Längsrippen gleiten die Stege 32 der Wälzkörper-Halterungen 25 unbelasteter Wälzkörper 22. Solche Längsrippen 50 befinden sich auch an der Unterseite der Lagerschienen 15, 16, 33, 34, 35 und 36; sie begrenzen wegmässig das Abheben unbelasteter Wälzkörper von der Laufbahn.

Der Unterschied im Profil der verschiedenen Lager- und Laufschienen besteht darin, dass die Lauf- und Gegenlaufbahnen der tragenden Wälzkörper entsprechend ihrer unterschiedlichen Funktion auf verschiedenem Niveau verlaufen. Die Wälzkörper der Lagerschienen 8, 15 und 16 des Längslagerpaares 4, 5 und die Wälzkörper der Lagerschienen 33, 35 und 36 des Längslagerpaares 6, 7 dienen lediglich der Längsführung. Dabei laufen die Wälzkörper der oberen Lagerschienen 8, 15, 33 und 35 wegen der vorhandenen Längsrippen 50 tiefer in ihren Längsnuten als diejenigen der unteren Lagerschienen 16 und 36, weshalb die oberen Gegenlaufbahnen, z.B. 23, aller Laufschienen 10, 17, 37 und 38 durch frei gesetzte Flächen gebildet sind. Demgegenüber sind die zwischen der unteren Lagerschiene 9 bzw. 34 und der Laufschiene 10 bzw. 37 der Längslager 4 und 6 wirkenden Wälzkörper auch seitlich geführt, so dass sie auf die Träger 2 und 3 ausgeübte Seitenkräfte in begrenztem Mass aufnehmen können. Zu diesem Zweck weisen die betreffenden Lager- und Laufschienen, z.B. 9 und 11, an den einander zugewandten Längsseiten weniger tiefe Längsnuten 51 bzw. 52 auf, in denen die Wälzkörper seitlich geführt sind. Diese Längsnuten 51, 52 sind den Dimensionen der Wälzkörper 22 angepasst und daher weniger breit als die Länsnuten zur seitlichen Führung der Wälzkörper-Halterungen 25. Letztere Längsnuten können bei Bedarf aber auch an den Lagerabschnitten mit Seitenführung der Wälzkörper vorhanden sein, wobei die Stege der Halterungen je zur Hälfte in der Lagerschiene und zur Hälfte in der Laufschiene seitlich geführt sind.

Für den Fall, dass der Träger 2 durch eine motorische Kraft bewegt werden soll, ist an diesem eine Zahnstange 53 vorgesehen, in die ein Antriebsritzel eingreifen kann. Eine Kraftübertragung vom Träger 1 auf den Träger 3 lässt sich beispielsweise mit Zahnreihen 54 und 55 an den Lagerschienen 8 und 33 bewerkstelligen, die durch ein Zahnradgetriebe verbunden werden.

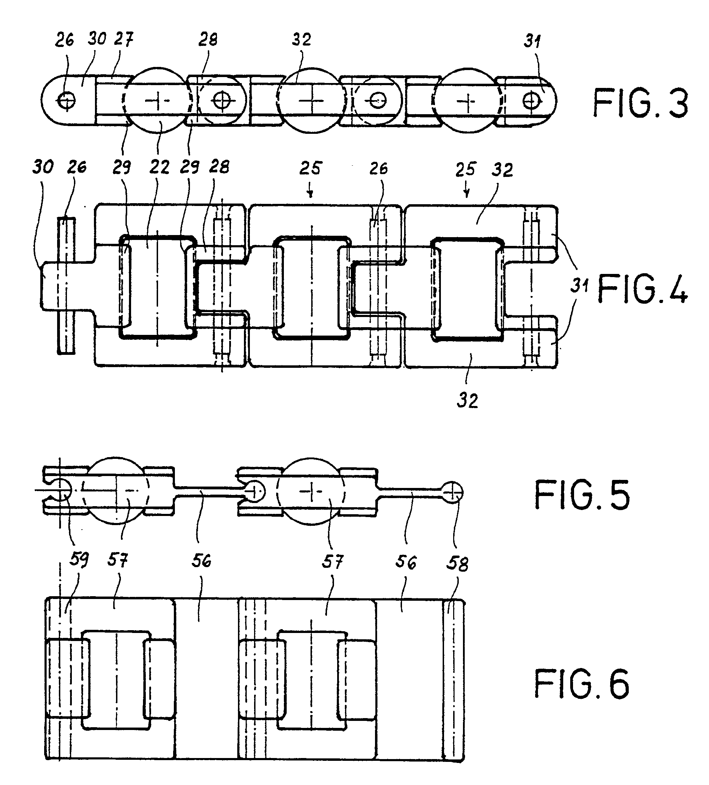

Die Fig. 5 und 6 zeigen durch je ein biegsames Bandstück 56 miteinander verbundene Wälzkörper-Halterungen 57, die im übrigen gleich ausgebildet sind wie diejenigen nach den Fig. 3 und 4. Das Bandstück 56 ist am einen Ende der Halterung 57 angeformt und weist an seinem freien Ende einen Wulst 58 auf. Am anderen Ende der Halterung 57 ist eine den Wulst 58 der benachbarten Halterung 57 umgreifende Pfanne 59 ausgebildet. Die steckbare Verbindung zwischen Wulst 58 und Pfanne 59 kann gelenkig oder steif sein.

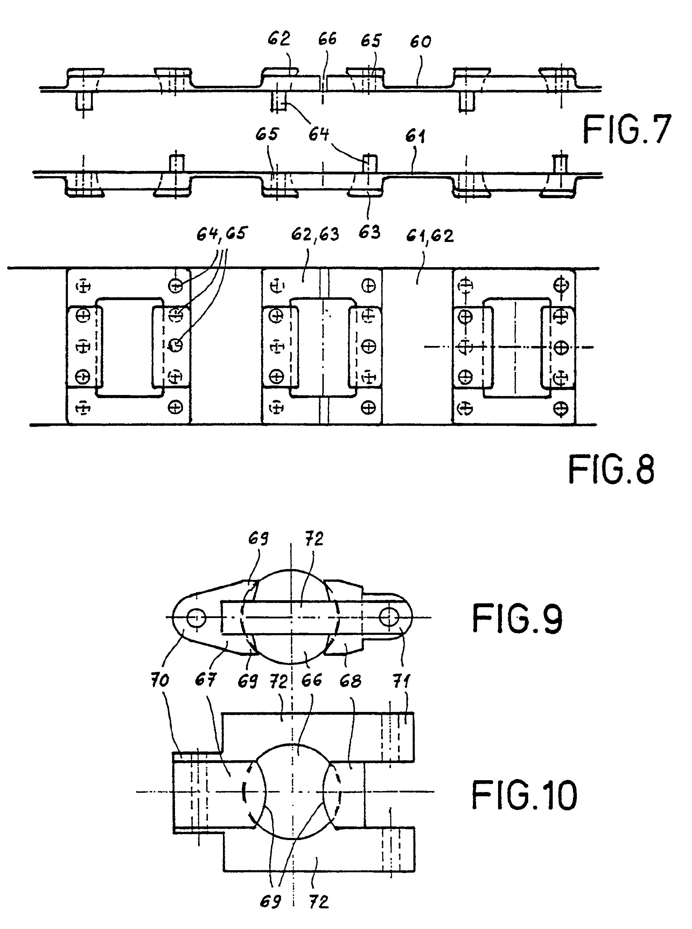

Eine weitere Ausführungsform der bandförmigen Wälzkörper-Führung ist in den Fig. 7 und 8 dargestellt. Bei diesem Beispiel sind die Wälzkörper-Halterungen in bezug auf die Fassung der Wälzkörper und die Anordnung der Stege gleich ausgebildet wie bei der Ausführungsform nach den Fig. 3 und 4. Zum Unterschied sind hier die Wälzkörper-Halterungen hälftig an zwei übereinanderliegenden, in der Zeichnung getrennt dargestellten, biegsamen Bändern 60 und 61 angeformt, wobei die sich je zu einer Halterung ergänzenden Hälften 62 und 63 durch steckbare Verbindungsmittel, z.B. druckknopfähnlich zusammenwirkende Stifte 64 und entsprechende Aufnahmen 65, zusammengehalten sind. Die Stossstelle 66 jedes der beiden Bänder 60, 61 befindet sich im Bereich einer Halterung, wobei aber die Stossstellen der beiden Bänder nicht an der gleichen Halterung vorgesehen, sondern in Bandlängsrichtung gegeneinander versetzt sind. Dadurch lassen sich die beiden Bänder 60,61 mit den genannten Verbindungsmitteln 64, 65 zu einem endlosen Band verschliessen.

Die längsbewegliche Lagerung mit seitlicher Führung muss unter Umständen aufgrund betrieblicher Bedingungen höheren Anforderungen hinsichtlich der auftretenden Kräfte und der Laufeigenschaften genügen, wofür Lageranordnungen mit zylindrischen Wälzkörpern gemäss Fig. 1 nicht mehr ausreichen. Für solche Fälle sind Kugellager oder sogenannte Kreuzrollenlager mit prismatischer Laufbahn vorzuziehen.

Die Fig. 9 und 10 zeigen eine Wälzkörper-Halterung für kugelförmige Wälzkörper 66, die in ähnlicher Weise wie im Beispiel nach den Fig. 3 und 4 zwei Haltekörper 67 und 68 mit elastischen Führungslippen 69 und angeformten Gelenkteilen 70 und 71 aufweist, welche durch mittige Stege 72 miteinander verbunden sind

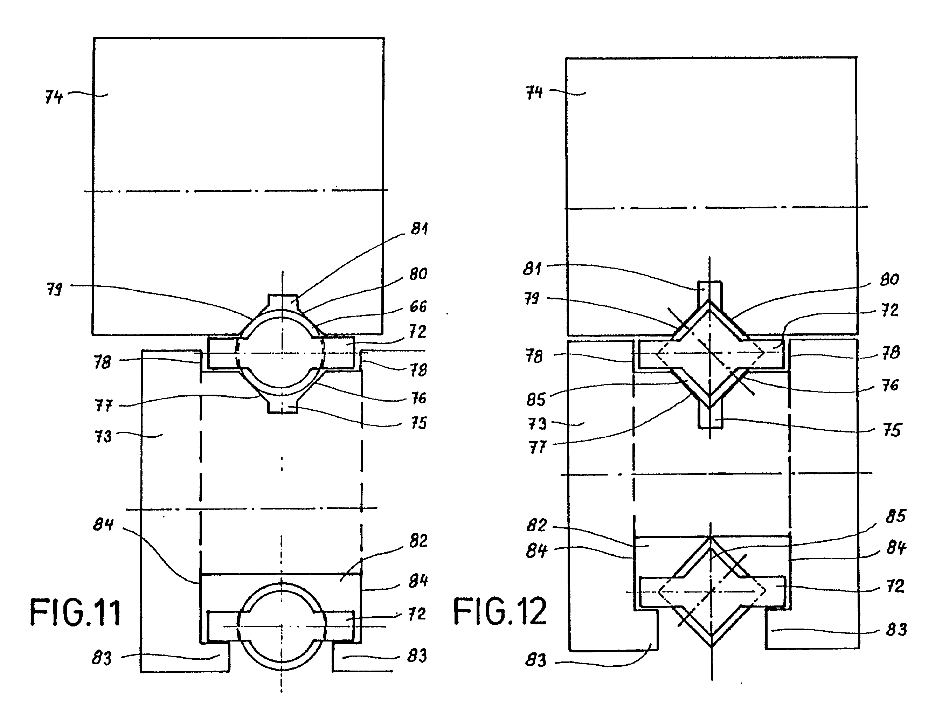

In Fig. 11 ist ein Teil eines Längslagers dargestellt, bei dem Wälzkörper-Halterungen nach den Fig 9 und 10 verwendet sind. Die Lagerschiene 73 weist an der der Laufschiene zugewandten Längsseite eine Längsnut 75 auf, an deren Grund die geneigten Flanken 76, 77 die prismatische Laufbahn der kugelförmigen Wälzkörper 66 bilden. Die äusseren Nutflanken 78 dienen zur Seitenführung der Halterungsstege 72. Die Gegenlaufbahn an der Laufschiene wird gleichermassen durch die geneigten Flanken 79, 80 der Längsnut 81 gebildet, wobei hier eine Seitenführung der Halterungsstege 72 entfällt. Die Längsnut 82 an der unteren Längsseite der Lagerschiene 73 dient dem Rücklauf der Wälzkörper 66. Die Stege 72 der Wälzkörper-Halterungen gleiten wie bei der Ausführungsform nach Fig. 1 auf Längsrippen 83 und sind an den Flanken 84 der Längsnut 82 seitlich geführt.

Eine im wesentlichen gleiche Ausführung zeigt die Fig. 12, wobei jedoch als Wälzkörper gekreuzte Rollen 85 vorgesehen sind. Die im übrigen übereinstimmenden Teile sind hier mit gleichen Bezugszeichen versehen wie in Fig. 11.

## Patentansprüche

1. Wälzkörper-Längslager an relativ zueinander längsverschiebbaren Trägern, wobei an dem einem Träger (1) zwei parallele Lagerschienen (8, 9; 15, 16) übereinander angeordnet sind und an dem anderen Träger (2) eine Laufschiene (10; 17) angeordnet ist, die zwischen den beiden Lagerschienen und parallel zu diesen verläuft, wobei ferner jede Lagerschiene (8, 9; 15, 16) mit einer an ihrer oberen und unteren Längsseite entlang führenden Umlaufbahn für die Wälzkörper (22) und die Laufschiene (10; 17) an ihrer oberen und unteren Längsseite je mit einer Gegenlaufbahn (23, 24) versehen ist, und wobei jede Lagerschiene (8, 9; 15, 16) an den genannten beiden Längsseiten eine Längsnut (51; 18, 19, 20, 21) aufweist, an deren Grund die Laufbahn für die Wälzkörper (22) ausgebildet ist, dadurch gekennzeichnet, dass die Lagerschienen (8, 9; 15, 16) und die Laufschiene (10; 17) sich über die ganze Länge der betreffenden Träger (1 bzw. 2) erstrecken, dass die Wälzkörper (22) in einer endlosen Reihe von bandförmig zusammenhängenden Halterungen (25) gelagert sind, dass die einzelnen Wälzkörper-Halterungen (25) beidseitig flache, seitwärts gerichtete Stege (32) aufweisen, die sich parallel zur Laufbahn erstrecken und zur Längsführung der Wälzkörper-Halterungen (25) an den Flanken der Längsnuten (51; 18, 19, 20, 21) dienen, und dass die Höhenlagen der Umlaufbahnen bzw. Gegenlaufbahnen an den verschiedenen Längsseiten der Lagerschienen (8, 9; 15, 16) und an der Laufschiene (10; 17) den unterschiedlichen Führungsfunktionen der Wälzkörper (22) an diesen Längsseiten angepasst sind, wobei die Längsnuten (19, 20) der Lagerschienen (8, 15, 16) für eine reine Längsführungsfunktion der Wälzkörper (22) tiefer sind als die Längsnut (51) der Lagerschiene (9) für eine Längs-und Seitenführungsfunktion der Wälzkörper (22).

2. Wälzkörper-Längslager nach Anspruch 1, dadurch gekennzeichnet, dass die Längsnut an der unteren Längsseite der Lagerschienen (8, 15, 33, 34, 35, 36) an ihren Öffnungsrändern gegeneinander gerichtete, die Stege (32) der Wälzkörper-Halterungen (25) untergreifende Längsrippen (50) aufweist, welche das Abheben unbelasteter Wälzkörper (22) von der Laufbahn wegmässig begrenzen.

3. Wälzkörper-Längslager nach Anspruch 2, dadurch gekennzeichnet, dass die obere Gegenlaufbahn durch eine an der Laufschiene (17) freigesetzte Fläche (23) gebildet ist.

4. Wälzkörper-Längslager nach Anspruch 1, dadurch gekennzeichnet, dass wenigstens eine Lagerschiene (9) und die Laufschiene (10) an den einander zugewandten Längsseiten Längsnuten (51, 52) aufweisen, in denen die Wälzkörper (22) seitlich geführt sind.

5. Wälzkörper-Längslager nach Anspruch 1, dadurch gekennzeichnet, dass die Wälzkörper-Halterungen (25) je durch ein Gelenk (26, 30, 31) miteinander verbunden sind.

6. Wälzkörper-Längslager nach Anspruch 5, dadurch gekennzeichnet, dass die Wälzkörper-Halterungen je durch ein biegsames Bandstück (56) miteinander verbunden sind.

7. Wälzkörper-Längslager nach Anspruch 6, dadurch gekennzeichnet, dass am einen Ende jeder Wälzkörper-Halterung ein biegsames Bandstück (56) angeformt ist, das an seinem freien Ende einen Wulst (58) aufweist, und dass am anderen Ende der Wälzkörper-Halterung eine den Wulst der benachbarten Wälzkörper-Halterung umgreifende Pfanne (59) ausgebildet ist.

8. Wälzkörper-Längslager nach Anspruch 6, dadurch gekennzeichnet, dass die Wälzkörper-Halterungen hälftig an zwei übereinanderliegenden biegsamen Bändern (60, 61) angeformt und die sich zu einer Halterung ergänzenden Hälften (62, 63) jeweils durch steckbare Verbindungsmittel (64, 65) zusammengehalten sind, dass sich die Stossstelle (66) der zusammengefügten Enden jedes Bandes im Bereich einer Halterung befindet und dass die Stossstellen der beiden Bänder in Bandlängsrichtung gegeneinander versetzt sind.

9. Wälzkörper-Längslager nach Anspruch 1, dadurch gekennzeichnet, dass als Umlenkorgan an den Enden jeder Lagerschiene ein unter Federdruck stehender halbkreiszylindrischer Pilz (39) dient, über den die Wälzkörper von der Laufbahn in die Rücklaufbahn, und umgekehrt, überführt werden.

10. Wälzkörper-Längslager nach Anspruch 1, dadurch gekennzeichnet, dass die Stege (32) der Wälzkörper-Halterungen (25) in der (Höhe symmetrisch zur Wälzkörperachse angeordnet sind.

11. Wälzkörper-Längslager nach Anspruch 5, dadurch gekennzeichnet, dass die Wälzkörper (22) zwischen den Gelenken (26, 30, 31) an ihrem Umfang drehbar gelagert und durch die Stege (32) seitlich geführt sind.

## Claims

1. Longitudinal roller bearing for supports moving longitudinally relative to each other, whereby two parallel bearing rails (8, 9; 15, 16) are arranged one above the other on one support (1) and one guide rail (10; 17) extending between the two bearing rails and in parallel thereto is arranged on the other support (2), whereby further each bearing rail (8, 9; 15, 16) is provided with a circulatory track for the rollers (22) on its upper and lower longitudinal side, and the guide rail (10; 17) is provided with a countertrack (23; 24) each on its upper and lower longitudinal side, and whereby each bearing rail (8, 9; 15, 16), on both longitudinal sides mentioned, has a longitudinal groove (51; 18, 19, 20, 21), on the base of which the track for the rollers (22) is formed, characterised in that the bearing rails (8, 9; 15, 16) and the guide rail (10; 17) extend over the entire length of the respective supports (1 and 2), in that the rollers (22) are mounted in an endless line of holders (25) linked together to form a band, in that individual roller holders (25) have flat laterally directed webs (32) on both sides extending parallel to the track and used as lateral guidance for the roller holders (25) on the flanks of the longitudinal grooves (51; 18, 19, 20, 21), and in that the height levels of the circulatory tracks or contertracks on the various longitudinal sides of the bearing rails (8, 9; 15, 16) and on the guide rail (10; 17) are adapted to suit the different guidance functions of the rollers (22) on these longitudinal sides, whereby the longitudinal grooves (19, 20) of the bearing rails (8, 15, 16) are deeper for a purely longitudinal guidance functon of the roller (22) than the longitudinal groove (51) of the bearing rail (9) for a longitudinal and lateral guidance function of the rollers (22).

2. Longitudinal roller bearing according to claim 1, characterised in that, on its opening edges, the longitudinal groove on the lower longitudinal side of the bearing rails (8, 15, 33, 34, 35, 36) has longitudinal ribs (50) directed against each other and engaging below the webs (32) of the roller holders (25) for limiting the amount of lift-off of load-free rollers (22) from the track.

3. Longitudinal roller bearing according to claim 2, characterised in that the upper countertrack is formed by a free standing surface (23) on the guide rail (17).

4. Longitudinal roller bearing according to claim 1, characterised in that at least one bearing rail (9) and the guide rail (10) have longitudinal grooves (51, 52) on the longitudinal sides facing each other for laterally guiding the rollers (22).

5. Longitudinal roller bearing according to claim 1, characterised in that the roller-holders (25) are connected with each other via a hinge (26, 30, 31).

6. Longitudinal roller bearing according to claim 5, characterised in that the roller holders are connected with each other via a flexible band piece (56).

7. Longitudinal roller bearing according to claim 6, characterised in that at one end each roller holder has a moulded-on flexible band piece (56), which on its free end has a torus (58), and that at the other end of the roller holder a cup (59) is shaped for embracing the torus of the adjacent roller holder.

8. Longitudinal roller bearing according to claim 6, characterised in that the roller holders are moulded half and half onto two superimposed flexible bands (60, 61) and the halves (62, 63) making up a holder are held together by plugin connecting means (64, 65) so that the joint (66) where the ends of each band meet is located in the area of a holder and that the joints of the two bands are staggered relative to each other in longitudinal direction of the band.

9. Longitudinal roller bearing according to claim 1, characterised in that the redirecting element at the ends of each bearing rail is a spring-biased semi-circular cylindrical mushroom (39) over which the rollers pass from the running track into the return track and vice-versa.

10. Longitudinal roller bearing according to claim 1, characterised in that the webs (32) of the roller holders (25), as regards height, are arranged symmetrically to the roller axis.

11. Longitudinal roller bearing according to claim 5, characterised in that the rollers (22) are pivoted on their circumference between the hinges (26, 30, 31) and laterally guided by the webs (32).

## Revendications

1. Appui longitudinal à rouleaux monté sur des supports mobiles longitudinalement l'un par rapport à l'autre, dans lequel : deux rails d'appui (8, 9 ; 15, 16) parallèles sont agencés l'un au-dessus de l'autre sur l'un (1) des supports tandis qu'un rail courant (10; 17) est agencé sur l'autre (2) support entre les deux rails d'appui et parallèlement à eux ; chaque rail d'appui (8, 9 ; 15, 16) comprend en outre sur ses faces longitudinales supérieure et inférieure, une piste de roulement dirigée longitudinalement et prévue pour les rouleaux (22) tandis que le rail courant (10 ; 17) comprend sur ses faces longitudinales supérieure et inférieure une contrepiste (23, 24) de roulement ; et chaque rail d'appui (8, 9 ; 15, 16) sur lesdites faces longitudinales comporte une rainure longitudinale (51 ; 18, 19, 20, 21) dont le fond forme la piste de roulement pour les rouleaux (22), caractérisé en ce que les rails d'appui (8, 9 ; 15, 16) et le rail courant (10 ; 17) s'étendent sur toute la longueur du support concerné (1 ou 2), en ce que les rouleaux (22) sont montés dans une bande sans fin formée par une succession de fixations (25) reliées entre elles, en ce que chaque fixation de rouleau (25) présente des deux côtés une éclisse plate (32) dirigée latéralement qui s'étend parallèlement à la piste et sert à guider longitudinalement la fixation (25) de rouleau sur les flancs des rainures (51 ; 18, 19, 20, 21), et en ce que les niveaux de hauteur de la piste de roulement et de la contre piste sont adaptés, sur les différentes faces longitudinales du rail d'appui (8, 9 ; 15, 16) et sur le rail courant (10 ; 17), aux différentes fonctions de guidage des rouleaux (22) sur ces faces longitudinales, les rainures longitudinales (19, 20) des rails d'appui (8, 15, 16) destinées à une fonction de pur guidage longitudinal des rouleaux (22) étant plus profondes que la rainure longitudinale (51) du rail d'appui (9) destinée à une fonction de guidage longitudinal et latéral des rouleaux (22).

2. Appui longitudinal à rouleaux selon la revendication 1, caractérisé en ce que la rainure longitudinale présente, sur la face longitudinale inférieure des rails d'appui (8, 15, 33, 34, 35, 36), des lèvres longitudinales (50) dirigées l'une vers l'autre sur leurs bords d'ouverture et en prise avec les éclisses (32) des fixations (25) de rouleaux, destinées à limiter le décollement de la piste des rouleaux (21) non chargés.

3. Appui longitudinal à rouleaux selon la revendication 2, caractérisé en ce que la contrepiste de roulement supérieure est formée par une surface (23) dégagée du rail courant (17).

4. Appui longitudinal à rouleaux selon la revendication 1, caractérisé en ce qu'au moins un rail d'appui (9) et le rail courant (10) présentent sur leurs faces longitudinales tournées l'une vers l'autre des rainures longitudinales (51, 52) dans lesquelles les rouleaux (22) sont guidés latéralement.

5. Appui longitudinal à rouleaux selon la revendication 1, caractérisé en ce que les fixations (25) de rouleaux sont reliées les unes aux autres par une articulation (26, 30, 31).

6. Appui longitudinal à rouleaux selon la revendication 5, caractérisé en ce que les fixations (25) de rouleaux sont reliées les unes aux autres par un élément de ruban flexible (56).

7. Appui longitudinal à rouleaux selon la revendication 6, caractérisé en ce que, à une extrémité de chaque fixation de rouleau, est formé un élément de ruban flexible (56) qui présente à son extrémité libre un renflement (58), tandis qu'à l'autre extrémité de la fixation de rouleau est formé un évidement (59) destiné à recevoir le renflement de la fixation de rouleau voisine.

8. Appui longitudinal à rouleaux selon la revendication 6, caractérisé en ce que les fixations de rouleau sont formées par moitiés sur deux bandes flexibles superposées (60, 61) et en ce que les moitiés (62, 63) sont assemblées pour former une fixation grâce à des moyens de liaison enfichables (64, 65), en ce que l'emplacement du joint (66) des extrémités aboutées de chaque bande se trouve au niveau d'une fixation et en ce que les emplacements de joint des deux bandes sont décalés l'un de l'autre dans la direction longitudinale des bandes.

9. Appui longitudinal à rouleaux selon la revendication 1, caractérisé en ce qu'on utilise comme organe de renvoi à l'extrémité de chaque rail d'appui un champignon (39) semi-cylindrique sollicité par un ressort, autour duquel les rouleaux sont guidés et renvoyés d'une piste de roulement vers la piste de roulement de retour.

10. Appui longitudinal à rouleaux selon la revendication 1, caractérisé en ce que les éclisses (32) des fixations de rouleau (25) sont disposées symétriquement sur la hauteur par rapport à l'axe des rouleaux.

11. Appui longitudinal à rouleaux selon la revendication 5, caractérisé en ce que les rouleaux (22) sont montés entre les articulations (26, 30, 31) de manière à tourner sur leur périphérie et sont guidés latéralement par les éclisses (32).

FIG.1

FIG. 2

EP 0 304 442 B1

26  30 27        28        32                    31

FIG. 3

30  26    29  22  29  28        25        26        25  32

FIG. 4

32

FIG. 5

59  57        56        57        56  58

FIG. 6

FIG.7

FIG.8

FIG.9

FIG.10

FIG.12

FIG.11